# EUROPÄISCHE PATENTSCHRIFT

(11) **EP 0 654 068 B1**
(45) Veröffentlichungstag und Bekanntmachung des Hinweises auf die Patenterteilung: **24.09.1997**
(21) Anmeldenummer: 94918828.8
(22) Anmeldetag: 31.05.1994
(51) Int. Cl.: C09D 5/00, C09D 5/02, E01F 9/04

(54) **VERFAHREN UND VORRICHTUNG ZUM AUFTRAGEN VON HORIZONTALMARKIERUNGEN AUF STRASSEN ODER ANDEREN VERKEHRSFLÄCHEN**
METHOD AND DEVICE FOR APPLYING SURFACES MARKINGS TO ROADS AND OTHER AREAS USED BY TRAFFIC
PROCEDE ET DISPOSITIF POUR L'APPLICATION DE MARQUAGES HORIZONTAUX SUR DES CHAUSSEES OU AUTRES SURFACES DESTINEES A LA CIRCULATION

(30) Priorität: 10.06.1993 CH 1739/93
(43) Veröffentlichungstag der Anmeldung: 24.05.1995
(73) Patentinhaber: PLASTIROUTE S.A., 1207 Genf (CH)
(72) Erfinder: BOLDT, Peter-Christian, Dr., D-79104 Freiburg (DE)
(74) Vertreter: Jörchel, Dietrich R.A.
(86) Internationale Anmeldenummer: EP9401774
(87) Internationale Veröffentlichungsnummer: WO9429391

(56) Entgegenhaltungen:
- EP-A- 0 192 439
- EP-A- 0 200 249
- EP-A- 0 280 102

## Beschreibung

Die vorliegende Erfindung betrifft ein Verfahren und eine Vorrichtung zum Auftragen von Horizontalmarkierungen auf Strassen oder anderen Verkehrsflächen unter Verwendung von wasserverdünnbaren Dispersionsfarben.

Horizontalmarkierungen, insbesondere Begrenzungs-, Leit- und Warnlinien, werden im allgemeinen mit Hilfe eines Markierungsfahrzeugs aufgetragen, das mit Farbspritzpistolen zum Spritzen der Markierungsfarbe und gegebenenfalls mit Perlstreuern zum Aufbringen von Reflexperlen ausgerüstet ist, wie zum Beispiel in der EP-B-0 280 102 beschrieben.

Allgemein bekannt sind Markierungsfarben mit Lösungsmitteln, deren Verwendung jedoch aus Gründen des Umweltschutzes immer häufiqer bemängelt wird. Ferner sind wasserverdünnbare Dispersionsfarben bekannt, die umweltfreundlicher sind.

Beiden Typen von Markierungsfarben ist jedoch der Nachteil einer ziemlich langen Trocknungszeit gemeinsam, die im allgemeinen 10 bis 30 Minuten beträgt. Bei einer Trocknungszeit von beispielsweise 20 Minuten und einer Markierungsgeschwindigkeit von 6 km/h muss daher hinter der Baustelle mit Hilfe einer Absperrkolonne eine Strecke von jeweils 2 km gesperrt werden, was beträchtliche Verkehrsbehinderungen und Verkehrsstaus zur Folge hat. Ferner müssen die Markierungsarbeiten bei ungünstiger Witterung und drohendem Regen unterbrochen werden, um ein eventuelles Verlaufen der noch nicht wasserfest gewordenen Farbe zu vermeiden.

Die EP-A-200 249 beschreibt ein Verfahren, in dem eine wässrige Dispersionsfarbe innerhalb von 15 Minuten, in speziellen Fällen in 6 Minuten, nach dem Auftragen, durch Zugabe eines wasserlöslichen Salzes, beispielsweise Natriumchlorid, Calciumchlorid oder dergleichen, zum Trocknen gebracht wird. Die Menge an Salz beträgt ungefähr 15 bis 25 g pro m² bestrichener Fläche.

Die EP-A-409 459 beschreibt säurekoagulierbare Dispersionsfarben, die insbesondere eine anionische stabilisierte Polymeremulsion und ein polyfunktionelles amino-Polymer enthalten und durch eine flüchtige Base im alkalischen Bereich stabilisiert sind. Nach dem Auftragen verdunstet die Base, so dass der pH-Wert absinkt und nach Ueberschreiten des Koagulierungs-pH-Wertes die Farbe sich verfestigt. Die Trocknungszeit beträgt 10 bis 20 Minuten oder darüber, je nach Temperatur und Luftfeuchtigkeitsgrad, die die Verflüchtigung der Base beeinflussen.

Es ist das Ziel der vorliegenden Erfindung, ein Verfahren und eine Vorrichtung zu schaffen, welche Markierungsarbeiten mit kürzeren und von der Witterung weitgehend unabhängigen Trocknungszeiten der Farbe zu erzielen erlauben und es damit ermöglichen, auch bei ungünstigen Witterungsverhältnissen, unabhängig von Luftfeuchtigkeit und Temperatur, sowie praktisch ohne Sperrung der Strasse zu arbeiten.

Diese Aufgabe wird bezüglich des Verfahrens durch die im kennzeichnenden Teil des Anspruchs 1 angegebenen Merkmale und bezüglich der Vorrichtung durch die im Anspruch 11 angegebenen Merkmale gelöst.

Das Auftragen der Farbe und der Säure erfolgt nach dem Fachmann wohlbekannten Methoden, vorzugsweise durch Aufsprühen.

Durch die erfindungsgemässe Massnahme lässt sich die Trocknungszeit und damit die - im verkehrstechnischen Sinne - Ueberfahrbarkeit der Farbe auf nur etwa ein bis zwei Minuten oder noch weniger, je nach Schichtdicke und Applikationsverfahren, und damit auf einen Bruchteil der bisher erforderlichen Trockenzeiten verkürzen.

Zweckmässige Ausgestaltungen der Erfindung ergeben sich aus den abhängigen Ansprüchen 2 bis 10 und 12.

Die Erfindung wird anhand der Zeichnungen an Ausführungsbeispielen näher erläutert. Es zeigen :
Figur 1 ein erstes Beispiel eines nur angedeuteten Markierungsfahrzeugs mit einer Farbspritzpistole, einem Reflexperlstreuer und einer Düse zum Aufsprühen von Säure auf die Markierung,
Figur 2 ein zweites Beispiel, bei welchem die Säure direkt in den Farbstrahl gespritzt wird,
Figur 3 ein drittes Beispiel, bei welchem ein Perlstreuer Reflexperlen, die zuvor mit Säure behandelt wurden, in den Farbstrahl einstreut,
Figur 4 ein viertes Beispiel, bei dem die in Figur 1 dargestellten Installationen auf dem Markierungsfahrzeug durch weitere Installationen ergänzt sind, und
Figuren 5 und 6 Tabellen der Ergebnisse von Vergleichsversuchen.

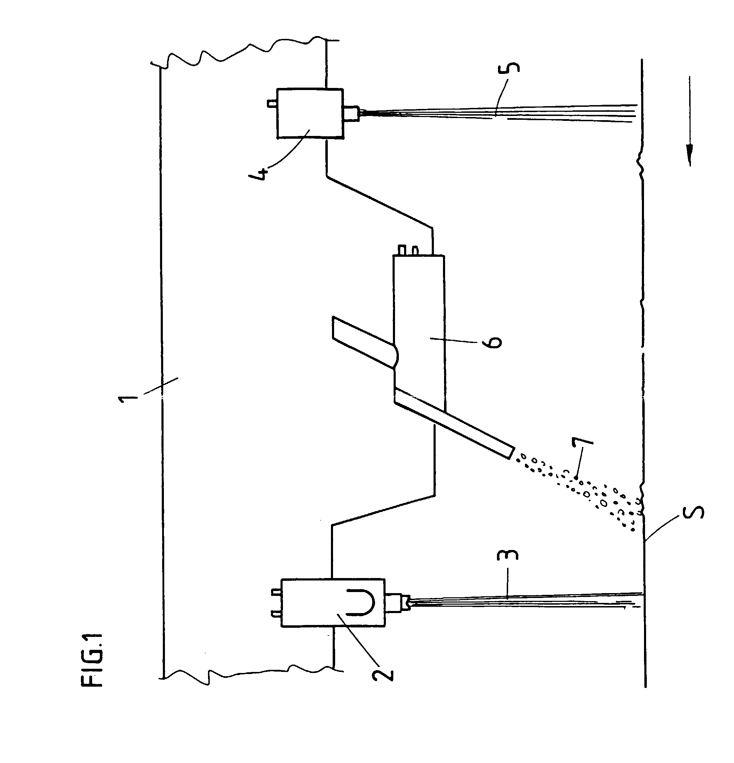

Gemäss einer ersten Ausführungsform des erfindungsgemässen Verfahrens, welche mit einem im Sinne des Pfeils verrückenden Markierungsfahrzeug nach Figur 1 durchführbar ist, wird der aufgetragene frische Farbfilm kurz nach dem Auftragen mit einer wässrigen Lösung einer Säure besprüht. Dazu sind auf dem Markierungsfahrzeug 1 eine übliche Farbspritzpistole 2, die einen Farbstrahl 3 auf die Fahrbahn S sprüht, dahinter ein Perlstreuer 6, der Reflexperlen 7 auf die frische Markierung aufstreut, und dahinter eine Düse 4 zum Aufsprühen einer Säure 5 auf die frisch gespritzte Farbmarkierung installiert.

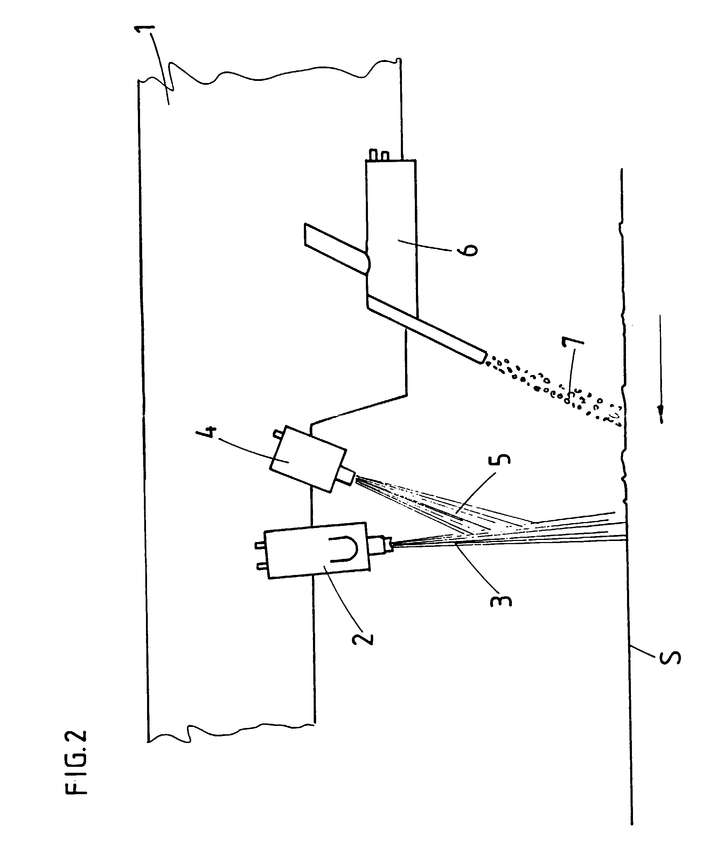

Bei einer zweiten Ausführungsform wird, wie in Figur 2 gezeigt, Säurelösung simultan mit der Farbe aufgetragen, indem in den Sprühnebel der Farbe 3, der aus einer Spritzpistole 2 kommt, die Säure 5 aus einer unmittelbar dahinter installierten Spritzdüse 4 eingesprüht wird. Dadurch wird eine homogenere Verteilung der Säure in der Farbschicht und ein homogenes Koagulieren, also Verfestigen der Farbe, erreicht. Danach werden mit dem Perlstreuer 6 Reflexperlen 7 auf die frische Markierung aufgebracht.

Gemäss einer dritten Ausführungsform wird die Säure in Form eines säurehaltigen Pulvers oder eines säurehaltigen partikelförmigen Materials verwendet. Dazu wird z.B. feste Säure unter Mahlen mit diversen handelsüblichen Füllstoffen (z.B. Silikate, Sulfate, Metalloxide) bis zur gewünschten Korngrössen- und Mengen-Einstellung vermischt.

Gemäss einer bevorzugten Ausführungsform wird ein säurehaltige Material folgendermassen hergestellt: Man löst wasserlösliche Säure in Wasser, gibt Reflexperlen in Form von Glasperlen in die Lösung, fügt, wenn erforderlich, übliche Füllmittel und/oder Bindemittel hinzu, filtriert und lässt trocknen. Die Glasperlen sind auf diese Weise mit Säure beschichtet. Es können auch andere, sogenannte Profilteilchen beschichtet und verwendet werden; dieses kombinierte Auftragen von Farbe und Glasperlen oder anderen Teilchen erfolgt wie beispielsweise in der EP-0 280 102 beschrieben. Dabei dienen die Glasperlen einerseits zum Schnelltrocknen der Farbe beim Auftragen und danach als Reflexkörper auf der Strassenmarkierung. Der ganze Arbeitsvorgang kann durch einmaliges Befahren der zu bearbeitenden Strecke ausgeführt werden, und die mobile Baustelle wird danach verlagert.

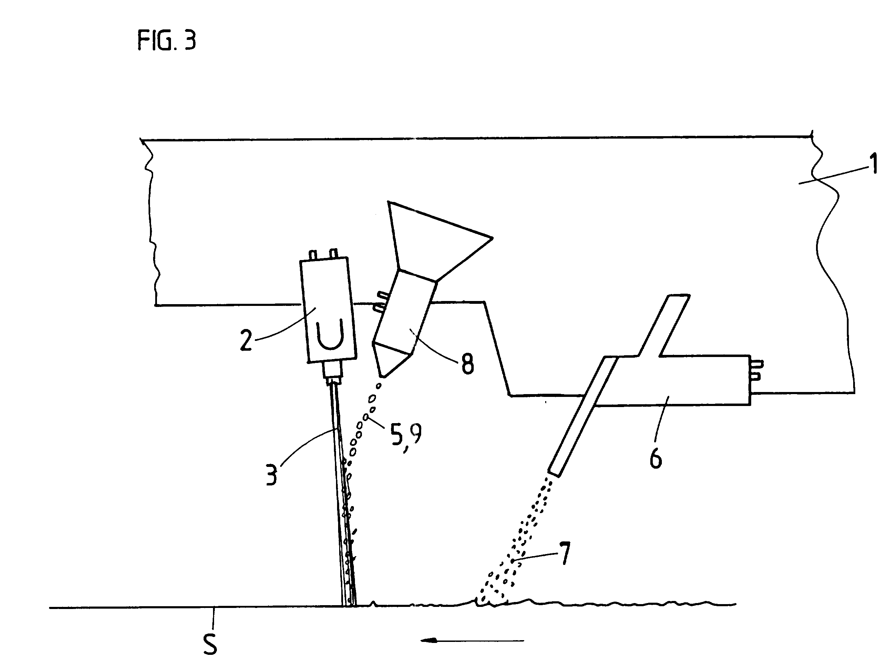

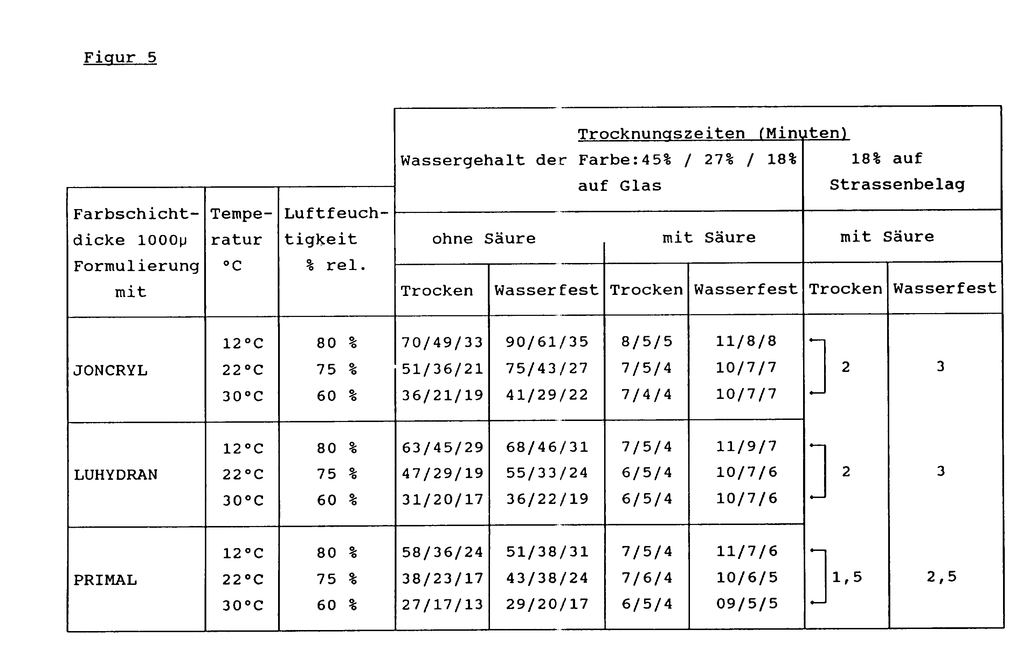

Die vorstehend erwähnte Ausführungsform des Verfahrens lässt sich mit einem Markierungsfahrzeug 1 nach Figur 3 durchführen: Danach wird mit der Farbspritzpistole 2 ein Farbstrahl 3 auf die Strassenoberfläche S gesprüht, und mit einem Perlstreuer 8 werden in den aus der Spritzpistole 2 austretenden Farbstrahl 3 Glasperlen 9 eingestreut, die zuvor, wie oben beschrieben, mit einer Säure 5 behandelt worden sind. Anstelle von behandelten Reflexperlen können auch mit Säure behandelte andere Teilchen, insbesondere Profilteilchen, in den Farbstrahl 3 eingestreut werden. Bei einer Variante des Verfahrens können die mit Säure behandelten Reflexperlen oder anderen Teilchen auch erst nach dem Aufbringen der Farbe auf die Strassenoberfläche S auf die frisch gezogene Farbmarkierung aufgestreut werden. Auch im Beispiel nach Figur 5 ist noch ein hinterer Perlstreuer 6 zum Aufstreuen von normalen Reflexperlen 7 vorgesehen.

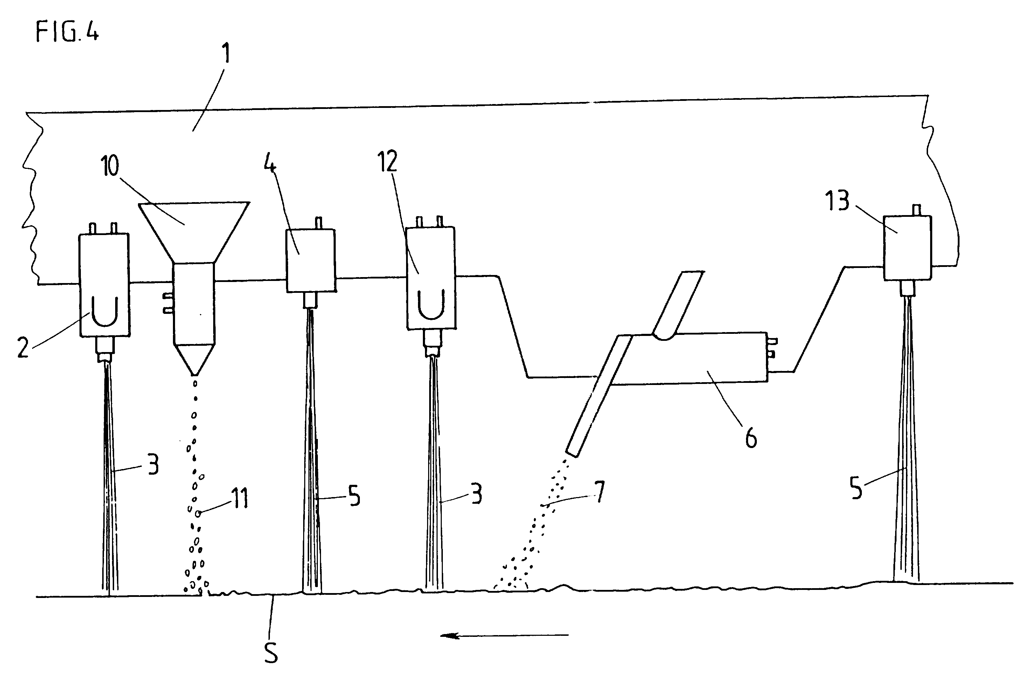

Auf das bekannte, in der EP-B-0 280 102 beschriebene Verfahren lässt sich das neue Verfahren nach der Erfindung, zum Beispiel mit einem Markierungsfahrzeug nach Figur 4, wie folgt anwenden :

Auf dem Markierungsfahrzeug 1 sind im kurzen Abstand hintereinander eine Farbspritzpistole 2, ein Teilchenspender 10, eine Düse 4, eine zweite Farbspritzpistole 12, ein Perlstreuer 6 und eine zweite Düse 13 installiert. Die Spritzpistole 2 spritzt einen Farbstrahl 3 auf die Fahrbahnoberfläche S, dahinter werden mit dem Teilchenspender 10 Profilteilchen 11 auf die Markierung aufgebracht; kurz dahinter wird mit der Düse 4 Säure 5 auf die frische Farbmarkierung aufgesprüht, anschliessend werden die Profilteilchen durch den von der zweiten Farbspritzpistole 12 gespritzen Farbstrahl 3 mit Farbe bedeckt, dann werden mit dem Perlstreuer 6 normale Reflexperlen 7 aufgebracht, welche insbesondere auf den durch die Profilteilchen 11 erzeugten Farbprofilerhöhungen haften, und schliesslich wird, zur raschen Trocknung des zuletzt aufgebrachten Farbfilms, mittels der Düse 13 nochmals Säure 5 auf die Markierung gesprüht.

Das erfindungsgemässe Verfahren kann mit handelsüblichen, wasserverdünnbaren, durch Säure koagulierbaren Farbdispersionen ausgeführt werden. Ob eine gewisse Dispersion für das Verfahren tauglich ist, kann sehr leicht getestet werden: Die Dispersion wird tropfenweise langsam mit einer Säure versetzt; koaguliert die Dispersion sehr schnell nach einer gewissen Zugabe, so ist sie tauglich. Zahlreiche, durch Säure koagulierbare, wasserverdünnbare Dispersionen bzw. Emulsionen, die gemäss vorliegendem Verfahren verwendet werden können, sind in der EP-A-0 409 459 beschrieben. Der pH-Wert der Formulierungen wird mittels bekannter Basen, wie beispielsweise Natronlauge, Ammoniak bzw. primäre bis tertiäre organische Aminobasen, auf pH 8 bis 10 eingestellt. Im Gegensatz zur EP-A-0 409 459 ist jedoch nach vorliegender Erfindung die Verwendung von flüchtigen Basen nicht notwendig. Das Festwerden der Formulierung (Koagulieren) geschieht im allgemeinen bei Umschlagen auf einen leicht sauren pH-Wert.

Die meisten handelsüblichen organischen und anorganischen, flüchtigen oder nichtflüchtigen Säuren sind gemäss dem vorliegendem Verfahren in Form einer wässrigen oder, wenn möglich, organischen Lösung, zum Beispiel Azeton, verwendbar. Beispielsweise werden Salzsäure, Schwefelsäure, Phosphorsäure, Salpetersäure, Essigsäure und Zitronensäure genannt.

Anstelle von Säuren können auch Säureanhydride verwendet werden, welche beim Kontakt mit dem Wasser der wässrigen Dispersionsfarbe als Säure reagieren. Der Einsatz entsprechender Säureanhydride anorganischer Säuren, zum Beispiel Phosphorpentoxid in fester Form, oder entsprechender Säureanhydride von organischen Säuren, in fester oder flüssiger Form, wie zum Beispiel Essigsäureanhydrid in Wasser oder in einem organischen Lösungsmittel wie Azeton gelöst, führten ebenfalls zu guten Ergebnissen. Beim Einsatz von festen Säureanhydriden werden diese vorzugsweise in Pulverform verwendet und entweder in den Farbstrahl der Spritzpistole eingestreut oder auf die frische Farbmarkierung aufgestreut, oder aber zur Beschichtung von Reflexperlen oder Profilteilchen verwendet.

Als vorteilhaft haben sich insbesondere wässrige Essigsäure und Zitronensäure erwiesen, weil Essigsäure flüchtig, umweltfreundlich und preiswert ist und weil Zitronensäure geruchlos ist.

Im allgemeinen wird im Falle schwacher Säuren, wie Zitronen- und Essigsäure, eine 10- bis 30-prozentige, vorzugsweise etwa 20-prozentige wässrige Säurelösung, im Falle stärkerer Säuren, wie Salz- oder Schwefelsäure, eine 5- bis 15-prozentige, vorzugsweise etwa 10-prozentige Lösung verwendet. Gegenüber den Verfahren, die das Festwerden der Farbe durch Zusatz von Salzen bewirken, sind die erforderlichen Säuremengen viel geringer. Abhängig von der Art und Zusammensetzung der verwendeten Farbdispersion, der Säure und der Säurekonzentration sowie dem Applikationsverfahren lieferte eine Zugabe an verdünnter Säure von 0,6 bis 2 Gewichts-% der aufgetragenen Farbdispersionsmenge gute Ergebnisse; in den meisten Fällen reichte etwa 1 Gewichts-% aus.

Zahlreiche Versuche wurden insbesondere mit Farbformulierungen durchgeführt, welche ausser den üblichen Komponenten, vor allem Füllstoffen und Farbpigmenten, als Bindemittel die drei folgenden handelsüblichen Dispersionen enthielten :
- Johncryll (Warenzeichen), vertrieben von der Firma Johnson;
- Luhydran (Warenzeichen), vertrieben von der Firma BASF;
- Primal (Warenzeichen), vertrieben von der Firma Rohm und Haas.

Als Säuren wurden getestet: Zitronensäure, Essigsäure, Salzsäure und Schwefelsäure.

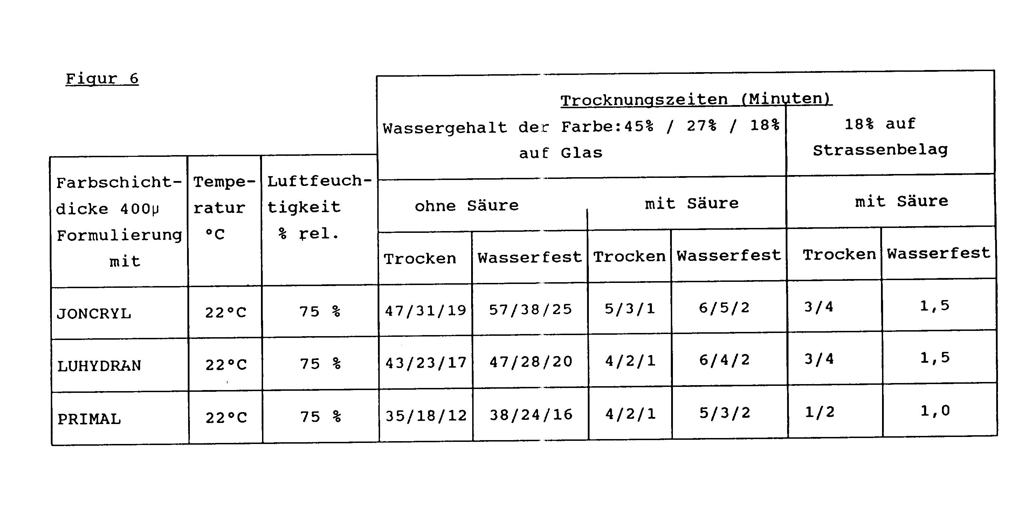

Die Tabellen in Figur 5 und 6 zeigen Versuchsergebnisse mit den drei in Spalte 1 angegebenen Formulierungen, wobei einmal mit einer Farbschichtdicke von ungefähr 1000µ (Figur 5) und das andere Mal mit 400µ (Figur 6) gearbeitet wurde. Die Versuchsergebnisse beziehen sich einerseits auf Laborversuche, bei denen die Farbschicht auf einer nicht saugfähigen Unterlage in Form einer Glasplatte aufgetragen wurde, und andererseits auf praktische Versuche, bei denen die angegebenen Farbdispersionen auf einen üblichen bituminösen Strassenbelag aufgebracht wurden. Bei den Laborversuchen wurden Farbdispersionen, wie angegeben, mit einem Wassergehalt von 45%, 27% bzw. 18%, bei den Versuchen auf der Strasse mit einem Wassergehalt von 18% verwendet. Die bei den in Spalte 2 bzw. in Spalte 3 angegebenen Werten der Temperatur und der Luftfeuchtigkeit erzielten Laborergebnisse stehen in den Spalten, 4, 5, 6 und 7, wobei jeweils drei, durch Schrägstriche getrennte Minutenangaben erscheinen, die sich auf den erwähnten Wassergehalt von 45%, 27% bzw. 18% beziehen, also in der Reihenfolge abnehmenden Wassergehalts angegeben sind.

Der pH-Wert der verwendeten Formulierungen wurde mit den genannten Basen auf pH 9 bis 10 eingestellt. Die mit verschiedenen Säuren erhaltenen Resultate waren praktisch identisch und sind deshalb nicht im einzelnen aufgeführt. Die angegebenen Daten beziehen sich bei den Versuchen mit einer Farbschichtdicke von 1000µ (Figur 5) auf 30-prozentige wässrige Zitronensäure und mit einer Farbschichtdicke von 400µ (Figur 6) auf 20-prozentige Essigsäure. Gemessen wurden jeweils die Zeiten, nach deren Ablauf die Farbe getrocknet bzw. wasserfest geworden war, wie in den Spalten 4 bis 9 der Tabellen angegeben und wie später noch näher erläutert.

Die Laborversuche wurden in einer Klimakammer, ohne Luftbewegung, durchgeführt. Die Farbdispersionen wurden mit einem Ziehschuh auf eine Glasplatte in definierter Schichtdicke aufgetragen. Sofort danach wurde der Farbfilm mit Säurelösung besprüht und soviel Säure nachgesprüht, bis die Farbe koagulierte. Die Trocknung wurde mit einem normalen "Daumentest" bestimmt, d.h. durch Auflegen des Daumens mit leichter Drehung. Wurde dabei der Farbfilm nicht verletzt, galt die Farbe als trocken und damit als überfahrbar. Nach dem Feststellen der Trocknung wurde der Farbfilm für 15 Sekunden in laufendes Wasser gehalten; wurde er unter diesen Bedingungen nicht mehr abgewaschen, galt er als wasserfest.

Bei den Versuchen auf der Strasse wurden Markierungslinien mit einer üblichen Farbspritzpistole gezogen. Im Falle einer Farbschichtdicke von 1000µ (Figur 5) wurde, mit einem Markierungsfahrzeug nach Figur 2, die Säurelösung direkt in den aus der Farbspritzpistole kommenden Farbstrahl eingespritzt. Im Falle einer Farbschichtdicke von 400µ (Figur 6) wurde, mit einem Markierungsfahrzeug nach Figur 1, die Säurelösung nach dem Aufbringen der Farbe auf die frische Markierung aufgesprüht. Die Trocknungszeiten wurden folgendermassen ermittelt: ein Personenauto fuhr über die verlegte Farbmarkierung. Die Farbe galt als trocken, wenn am Autoreifen keine Farbspuren zu sehen waren bzw. wenn sich auf der Farbe keine Reifenspuren befanden. Die Farbmarkierung galt als wasserfest, wenn sie sich nach 10 Sekunden unter fliessendem Wasser nicht auflöste.

Bei den Strassenversuchen ergaben sich innerhalb der Fehlergrenzen bei allen Temperaturen und allen Werten der Luftfeuchtigkeit ungefähr die gleichen angegebenen kurzen Zeiten, und zwar bei einer Farbschichtdicke von 1000µ eine Trocknungszeit von 2 Minuten oder darunter und eine "Wasserfest"-Zeit von 3 Minuten oder darunter. Im Falle einer Farbschichtdicke von 400µ (Figur 6) betrug die Trocknungszeit 3/4 Minute oder weniger, die "Wasserfest"-Zeit 1,5 Minuten oder weniger. Auch bei anderen Temperaturen und Luftfeuchtigkeiten, wie in Figur 6 angegeben, änderten sich die angegebenen Trocknungszeiten nur ganz unbedeutend.

Die verwendete Menge an wässriger Säurelösung betrug etwa 1 Gewichts-% der aufgetragenen Farbmenge.

Die Tabellen nach den Figuren 5 und 6 zeigen, dass die Trocknungszeiten bei Verwendung von Säure um ein Vielfaches kürzer sind als bei einer normalen Trocknung ohne Säure. Ferner zeigt sich, dass die Trocknungszeiten, die im Freien, also bei einer praktisch stets vorhandenen Luftbewegung, auf einer üblichen mehr oder weniger saugfähigen Bitumen-Unterlage erhalten wurden, wesentlich kürzer sind als die auf einer Glasplatte in einer Klimakammer ohne Luftbewegung erhaltenen Trockungszeiten. Wie zu erwarten, sind die Trocknungszeiten bei gleicher Applikationstechnik mit geringerer Farbschichtdicke kürzer als bei grösserer Farbschichtdicke. Auch nimmt die Trocknungszeit mit abnehmendem Wassergehalt der Farbe deutlich ab. Schliesslich zeigen die Tabellen, dass die Zeiten zum Trocknen und zum Wasserfestwerden ohne Zusatz von Säure ziemlich stark von der Luftfeuchtigkeit und der Temperatur abhängen, dagegen bei Zusatz von Säure von Temperatur und Luftfeuchtigkeit fast unabhängig sind.

Wie sich zeigte, kann das Verfahren in allen oben genannten Ausführungsformen ausgeführt werden, wenn die aufgetragene Schichtdicke der Farbe weniger als 350µ bis 450µ beträgt. Bei grösseren Schichtdicken empfiehlt es sich, die Säure nicht nur auf die Oberfläche der schon aufgetragenen Farbe zu geben, weil sonst das Risiko besteht, dass sich eine feste Oberflächenhaut bildet, unter der die Farbe flüssig bleibt, sondern die Säure oder das säurehaltige Material simultan mit der Farbe, beispielsweise in Form eines Sprühnebels, aufzutragen.

In der Praxis kann auch so vorgegangen werden, dass zunächst die Farbe und gegebenenfalls die Glasperlen mit einem üblichen Markierungsfahrzeug aufgebracht werden, während das Aufsprühen der Säure von einem dem Markierungsfahrzeug unmittelbar folgenden Sicherungsfahrzeug aus erfolgt, welches normalerweise bei mobilen Baustellen verwendet wird und die Warn- und Hinweisschilder für den nachfolgenden Verkehr trägt.

Die Erfindung ermöglicht also eine kostengünstige Methode zum schnellen Erreichen der Ueberfahrbarkeit einer Strassenmarkierung. Die Methode kann auf jeder mobilen Baustelle, auf Parkplätzen, Flughäfen-Rollbahnen usw. angewendet werden, und im allgemeinen auf jeder Hoch- und Tiefbaustelle, wo sehr schnell gearbeitet werden muss. Zu beachten ist ebenfalls die Umweltverträglichkeit der Methode: Da die Koagulation schon bei schwach saurem pH erfolgt und die aufgetragene Säure neutralisiert wird, gelangt praktisch keine Säure auf die Strasse bzw. in die Umwelt. Wird zudem eine nicht flüchtige Säure, zum Beispiel Zitronensäure verwendet, ist diese Methode auch absolut geruchlos.

Das erfindungsgemässe Verfahren kann in der beschriebenen Art auf alle wässrigen Farbformulierungen, denen ein säurekoagulierbares Bindemittel zugrunde liegt, angewendet werden.

## Patentansprüche

1. Verfahren zum Auftragen von Horizontalmarkierungen auf Strassen oder anderen Verkehrsflächen unter Verwendung von wasserverdünnbaren Dispersionsfarben, dadurch gekennzeichnet, dass eine wässrige, durch Säure koagulierbare Dispersionsfarbe auf die Strassenoberfläche aufgetragen und mit einer Säure in Kontakt gebracht wird.

2. Verfahren nach Anspruch 1, dadurch gekennzeichnet, dass eine basisch eingestellte Dispersionsfarbe verwendet wird, die ein durch Säure koagulierbares Bindemittel enthält.

3. Verfahren nach Anspruch 1 oder 2, dadurch gekennzeichnet, dass die Säure in Form einer wässrigen Lösung oder in einem organischen Lösungsmittel, vorzugsweise als 10- bis 30-prozentigen Lösung, auf die frisch aufgetragene Dispersionsfarbe gesprüht wird.

4. Verfahren nach Anspruch 1 oder 2, dadurch gekennzeichnet, dass die Dispersionsfarbe auf die Stras-, senoberfläche aufgesprüht und die Säure in Form einer wässrigen Lösung oder in einem organischen Lösungsmittel, vorzugsweise als 10- bis 30-prozentigen Lösung, in den Sprühnebel der Farbe eingesprüht wird.

5. Verfahren nach Anspruch 1, dadurch gekennzeichnet, dass zu der Dispersionsfarbe ein Säureanhydrid zugegeben wird, welches mit dem Wasser der wässrigen Dispersionsfarbe die erwähnte Säure bildet.

6. Verfahren nach Anspruch 1, 2 oder 5, dadurch gekennzeichnet, dass die Säure in Form von festen säurehaltigen oder säureanhydridhaltigen Partikeln auf die aufgetragene Dispersionsfarbe gestreut wird.

7. Verfahren nach Anspruch 1, 2 oder 5, dadurch gekennzeichnet, dass die Dispersionsfarbe auf die Strassenoberfläche aufgesprüht und die Säure in Form von festen säurehaltigen oder säureanhydridhaltigen Partikeln in den Sprühnebel der Farbe eingespritzt wird.

8. Verfahren nach Anspruch 6 oder 7, dadurch gekennzeichnet, dass die säurehaltigen Partikel aus Glasperlen bestehen, die mit einer dünnen Schicht aus anhaftender fester Säure oder festem Säureanhydrid beschichtet sind.

9. Verfahren nach einem der Ansprüche 1 bis 4, dadurch gekennzeichnet, dass als Säure handelsübliche anorganische oder organische Säuren, vorzugsweise Zitronensäure, Essigsäure, Salzsäure oder Schwefelsäure, verwendet werden.

10. Verfahren nach einem der Ansprüche 5 bis 8, dadurch gekennzeichnet, dass als Säureanhydride eines der folgenden verwendet wird : Säureanhydride anorganischer Säuren, zum Beispiel Phosphorpentoxid in fester Form, Säureanhydride organischer Säuren in fester Form oder Säureanhydride organischer Säuren in flüssiger Form, zum Beispiel in einem organischen Lösungsmittel gelöstes oder mit Wasser verdünntes Essigsäureanhydrid.

11. Vorrichtung zur Durchführung des Verfahrens nach Anspruch 1 mit einem Markierungsfahrzeug (1), das mit einer Farbspritzpistole (2) oder mit zwei, hintereinander angeordneten Farbspritzpistolen (2, 12) ausgerüstet ist, dadurch gekennzeichnet, dass hinter der Farbspritzpistole (2) bzw. hinter jeder der beiden Farbspritzpistolen (2, 12) eine Düse (4, 13) zum Sprühen von Säure (5) installiert ist.

12. Vorrichtung nach Anspruch 11 mit zwei hintereinander angeordneten Farbspritzpistolen (2, 12), dadurch gekennzeichnet, dass zwischen der ersten Farbspritzpistole (2) und der ersten Düse (4) ein Spender (10) für Profilteilchen (11) und zwischen der zweiten Farbspritzpistole (12) und der zweiten Düse (13) ein Reflexperlstreuer (6) installiert sind.

## Claims

1. Method of applying horizontal markings to roads or other traffic areas, using water-thinnable dispersion paints, characterized in that an aqueous, acid-coagulable dispersion paint is applied to the road surface and is brought into contact with an acid.

2. Method according to Claim 1, characterized in that an dispersion paint is used which has been formulated to the basic and which contains an acid-coagulable binder.

3. Method according to Claim 1 or 2, characterized in that the acid in the form of an aqueous solution or in an organic solvent, preferably as a from 10 to 30 per cent strength solution, is sprayed on to the freshly applied dispersion paint.

4. Method according to Claim 1 or 2, characterized in that the dispersion paint is sprayed on to the road surface and the acid in the form of an aqueous solution or in an organic solvent, preferably as a from 10 to 30 per cent strength solution, is sprayed into the spray mist of the paint.

5. Method according to Claim 1, characterized in that an acid anhydride is added to the dispersion paint and forms, with the water of the aqueous dispersion paint, the abovementioned acid.

6. Method according to Claim 1, 2 or 5, characterized in that the acid in the form of solid, acid-containing or anhydride-containing particles is scattered on to the applied dispersion paint.

7. Method according to Claim 1, 2 or 5, characterized in that the dispersion paint is sprayed on to the road surface and the acid in the form of solid, acid-containing or anhydride-containing particles is sprayed into the spray mist of the paint.

8. Method according to Claim 6 or 7, characterized in that the acid-containing particles are composed of glass beads which are coated with a thin, adhering layer of solid acid or solid acid anhydride.

9. Method according to one of Claims 1 to 4, characterized in that the acids used are commercially available inorganic or organic acids, preferably citric acid, acetic acid, hydrochloric acid or sulphuric acid.

10. Method according to one of Claims 5 to 8, characterized in that the acid anhydride used is one of the following: anhydrides of inorganic acids, for example phosphorus pentoxide in solid form, anhydrides of organic acids in solid form, or anhydrides of organic acids in liquid form, for example acetic anhydride dissolved in an organic solvent or diluted with water.

11. Apparatus for carrying out the method according to Claim 1, having a marking vehicle (1) which is provided with one paint spray gun (2) or with two paint spray guns (2, 12) arranged one after another, characterized in that behind the paint spray gun (2) or behind each of the both paint spray guns (2, 12) there is installed a nozzle (4, 13) for spraying acid (5)

12. Apparatus according to Claim 11, having two paint spray guns (2, 12), characterized in that a dispenser (10) for profiled particles (11) is installed between the first paint spray gun (2) and the first nozzle (4), and that a reflective-bead scatterer (6) is installed between the second paint spray gun (12) and the second nozzle (13).

## Revendications

1. Procédé d'application de marques horizontales sur des routes ou autres surfaces de trafic utilisant des vernis sous forme de dispersion diluable dans l'eau, caractérisé en ce qu'une dispersion aqueuse coagulable par l'acide est appliquée sur la surface de la route et amenée en contact avec un acide.

2. Procédé selon la revendication 1, caractérisé en ce qu'une dispersion alcaline est utilisée, cette dispersion contenant un liant coagulable par l'acide.

3. Procédé selon la revendication 1 ou 2, caractérise en ce que l'acide, sous forme de solution aqueuse ou de solution dans un solvant organique, de préférence une solution de 10 à 30%, est appliqué par aspersion sur la dispersion de vernis fraîchement déposée.

4. Procédé selon la revendication 1 ou 2, caractérisé en ce que la dispersion de vernis est appliquée par aspersion sur la surface de la route et en ce que l'acide, sous forme d'une solution aqueuse ou d'une solution dans un solvant organique, de préférence une solution de 10 à 30%, est appliquée par giclage dans le brouillard d'aspersion du vernis.

5. Procédé selon la revendication 1, caractérisé en ce qu'un anhydride d'acide est ajouté à la dispersion de vernis, cet anhydride d'acide formant l'acide susmentionné avec l'eau de la dispersion aqueuse de vernis.

6. Procédé selon l'une des revendications 1, 2 ou 5, caractérisé en ce que l'acide est répandu sous forme de particules solides contenant de l'acide ou de l'anhydride d'acide sur la dispersion de vernis déposée.

7. Procédé selon l'une des revendications 1, 2 ou 5, caractérisé en ce que la dispersion de vernis est appliquée par aspersion sur la surface de la route et en ce que l'acide, sous forme de particules solides contenant de l'acide ou de l'anhydride d'acide, est introduit par giclage dans le brouillard d'aspersion de vernis.

8. Procédé selon la revendication 6 ou 7, caractérisé en ce que les particules contenant de l'acide se présentent sous forme de perles de verre recouvertes d'une fine couche d'acide solide adhérant ou d'anhydride d'acide solide adhérant.

9. Procédé selon l'une des revendication 1 à 4, caractérisé en ce qu'on utilise des acides inorganiques ou organiques du commerce, de préférence de l'acide citrique, de l'acide acétique, de l'acide chlorhydrique ou de l'acide sulfurique.

10. Procédé selon l'une des revendications 5 à 8, caractérisés en ce qu'on utilise l'un des anhydrides d'acides suivant : des anhydrides d'acides inorganiques, par exemple du pentoxyde phosphorique sous forme solide, des anhydrides d'acides organiques sous forme solide ou des anhydrides d'acides organiques sous forme liquide, par exemple de l'anhydride d'acide acétique dissout dans un solvant organique ou dilué avec de l'eau.

11. Dispositif pour la mise en oeuvre du procédé selon la revendication 1, au moyen d'un véhicule de marquage (1) équipé d'un pistolet gicleur (2) ou de deux pistolets gicleurs (2, 12) montés l'un derrière l'autre, caractérisé en ce qu'une buse (4, 13) est installée derrière le pistolet de giclage (2), respectivement derrière chacun des pistolets de giclage (2, 12), pour l'aspersion par l'acide.

12. Dispositif selon la revendication 11 comprenant deux pistolets (2, 12) disposés l'un derrière l'autre, caractérisé en ce qu'un distributeur (10) de particules profilées (11) est installé entre le premier pistolet (2) et la première buse (4) et en ce qu'un répandeur (6) de perles réfléchissantes est installé entre le second pistolet (12) et la seconde buse (13).
